# EUROPÄISCHE PATENTSCHRIFT

(11) **EP 3 230 419 B1**
(45) Veröffentlichungstag und Bekanntmachung des Hinweises auf die Patenterteilung: **31.10.2018**
(21) Anmeldenummer: 15820450.3
(22) Anmeldetag: 09.12.2015
(51) Int. Cl.: C10M 147/04, C08J 3/02, C08J 3/09, C10M 107/38

(54) **VERFAHREN ZUR HERSTELLUNG VON ÖL-MODIFIZIERTEN PTFE-FESTSCHMIERSTOFFEN**
PROCESS FOR THE PRODUCTION OF OIL-MODIFIED PTFE SOLID LUBRICANTS
PROCÉDÉ DE PRODUCTION DE LUBRIFIANTS SOLIDES À BASE DE PTFE MODIFIÉ AVEC UN HUILLE

(30) Priorität: 12.12.2014 DE 102014225670
(43) Veröffentlichungstag der Anmeldung: 18.10.2017
(73) Patentinhaber: Leibniz-Institut für Polymerforschung Dresden e.V., 01069 Dresden (DE)
(72) Erfinder: LEHMANN, Dieter, 01640 Coswig (DE); HOFFMANN, Thorsten, 01561 Lampertswalde (DE)
(74) Vertreter: Rauschenbach, Marion
(86) Internationale Anmeldenummer: PCT/EP2015/079092
(87) Internationale Veröffentlichungsnummer: WO 2016/091936

(56) Entgegenhaltungen:
- DE-A1-102007 055 927
- HOFFMANN T ET AL: "Stability of oil-based dispersions containing poly(tetrafluoroethylene) micropowder", COLLOIDS AND SURFACES. A, PHYSICACHEMICAL AND ENGINEERING ASPECTS, Bd. 457, 4. Juni 2014 (2014-06-04), Seiten 297-306, XP029037300, ISSN: 0927-7757, DOI: 10.1016/J.COLSURFA.2014.05.068
- T. HOFFMANN ET AL: "Chemical modification of poly(tetrafluoroethylene) micropowder - basis for special lubricant additives", LUBRICATION SCIENCE, Bd. 25, Nr. 4, 11. Oktober 2012 (2012-10-11), Seiten 313-327, XP055151563, ISSN: 0954-0075, DOI: 10.1002/ls.1209

## Beschreibung

Die Erfindung bezieht sich auf das Gebiet der Chemie und betrifft ein Verfahren zur Herstellung von Öl-modifizierten PTFE-Festschmierstoffe, welche beispielsweise als Additive eingesetzt werden können oder das Basismaterial für Öl-PTFE-Dispersionen, Öl-PTFE-Fette oder Öl-PTFE-Schmierstoffpasten, die in oder als Spezialschmierstoffe und auch in oder als Festschmierstoff für beispielsweise Öl-freie Getriebe in den Einsatzgebieten Maschinenbau, Fahrzeugtechnik, Luft- und Raumfahrt eingesetzt werden können, bilden.

Bekannt sind langzeitstabile Öl-PTFE-Dispersion, die aus PTFE-Partikeln und mindestens einem einfach oder mehrfach olefinisch ungesättigtem Öl oder Ölgemisch bestehen, wobei die Moleküle des olefinisch ungesättigten Öles oder der olefinisch ungesättigten Anteile des Ölgemisches an PTFE-(Primär-)Partikeloberflächen über Radikalreaktionen kovalent/chemisch gekoppelt sind, und wobei eine permanente Ladungstrennung zwischen den PTFE-Partikeloberflächen und den gekoppelten Ölmolekülen vorliegt und eine feine Dispergierung der PTFE-Partikel im Öl oder Ölgemisch vorliegt (DE 10 2007 055 927 A1). Hergestellt werden derartige langzeitstabile Öl-PTFE-Dispersionen, indem modifizierte PTFE-(Emulsions-)Polymere mit persistenten Perfluor-(peroxy-)radikalen gemeinsam mit mindestens einem olefinisch ungesättigten Öl oder Ölgemisch, welches mindestens olefinisch ungesättigte Öl-Anteile aufweist, gemischt und nachfolgend die modifizierten PTFE-(Emulsions-)Polymere einer mechanischen Beanspruchung unterworfen werden, wodurch die eingesetzten modifizierten PTFE-(Emulsions-)Polymere deagglomeriert und fein dispergiert werden.

Weiterhin ist ein Verfahren zur Herstellung von stabilen Öl-PTFE-Dispersionen bekannt, bei dem PTFE-Abfall-Materialien und/oder PTFE-Recyclat-Materialien für eine Bearbeitung mit hochenergetischer elektromagnetischer Strahlung vorbereitet, die Materialien danach mit hochenergetischer elektromagnetischer Strahlung behandelt, und nachfolgend mindestens die bestrahlten PTFE-Materialien gemeinsam mit Öl oder Ölgemischen unter mechanischer Beanspruchung homogenisiert und reaktiv umgesetzt werden, wobei Öl oder Ölgemische eingesetzt werden, welche mindestens 5 Ma.-% olefinisch ungesättigte Öle enthalten (DE 10 2011 083 076 A1).

Es wurden bereits Silikonöl-PTFE-Dispersionen vorgeschlagen, die aus Silikonöl und PTFE-Partikeln mit funktionellen Gruppen und/oder mit Radikalen bestehen, wobei Silikonölmoleküle mit den PTFE-Partikeloberflächen physikalisch in Wechselwirkung stehen und/oder Silikonölmoleküle über eine Reaktion mit funktionellen Gruppen mit den PTFE-Partikeloberflächen über kovalente Bindungen und/oder Salzbindungen chemisch gekoppelt sind und/oder Silikonölmoleküle über eine Reaktion mit Radikalen am PTFE mit den PTFE-Partikeloberflächen über kovalente Bindungen chemisch gekoppelt sind, und die PTFE-Partikel elektrostatisch aufgeladen sind, und weiterhin freie funktionelle Gruppen und/oder Radikale des PTFE und/oder am PTFE für kovalente Bindungen und/oder für chemische Kopplungen über Salzbindungen mit einer Substratoberfläche vorhanden sind. Hergestellt werden diese Silikonöl-PTFE-Dispersionen, indem PTFE-(Mikro-)Pulver und Silikonöl unter Schereinwirkung dispergiert werden.

Bekannt ist auch die reaktive Kopplung/Oberflächenmodifizierung von PTFE-Mikropulverpartikeln mit olefinisch ungesättigten Monomeren, Oligomeren und Polymeren (DE 103 51 812 A1, DE 103 51 813 A1, DE 10 2004 016 876 A1).
Aus der DE 10 2010 038 286 A1 ist weiterhin ein Verfahren zur Herstellung von modifizierten Perfluor-Kunststoffen bekannt, bei dem strahlenchemisch und/oder plasmachemisch und/oder thermomechanisch modifizierte Perfluorpolymere und niedermolekulare und/oder oligomere und/oder polymere Verbindungen mit mindestens einer Hydroxygruppe in Form von Phenolgruppen und/oder Hydroxyarylgruppen und/oder Hydroxyalkylgruppen und/oder mindestens einer phenolischen und mindestens einer aliphatischen Hydroxygruppe homogenisiert und in Pulverform oder in Pastenform oder in Schmelze unter Scherbedingungen reaktiv umgesetzt werden.

Nachteilig bei den Lösungen des Standes der Technik ist, dass zur Herstellung von Öl-modifizierten PTFE-Festschmierstoffen immer erst Öl-PTFE-Dispersionen hergestellt und diese stabilen Öl-PTFE-Dispersionen nachfolgend durch eine aufwändige Abtrennung der überschüssigen Öl-Komponente separiert werden müssen. Durch die elektrostatische Aufladung der Öl-modifizierten PTFE-Partikel in der Dispersion ist diese Abtrennung der Öl-modifizierten PTFE-Festprodukte oft sehr schwierig und kostenaufwändig, insbesondere dadurch, dass durch die Manipulationen während und nach der Separation beispielsweise Agglomeratbildung und Kompaktierung der Festprodukte auftreten, die sich bei einer späteren (Weiter-)Verarbeitung nur schwer wieder rückgängig machen lassen und sich dadurch negativ auf die Produkteigenschaften auswirken.

Aufgabe der vorliegenden Erfindung ist es, ein einfaches und kostengünstiges Verfahren zur Herstellung von Öl-modifizierten PTFE-Festschmierstoffen anzugeben, die sich leichter handhaben und dosieren lassen und gut weiterverarbeitbar sind.

Die Aufgabe wird durch die in den Ansprüchen angegebene Erfindung gelöst. Vorteilhafte Ausgestaltungen sind Gegenstand der Unteransprüche.

Bei dem erfindungsgemäßen Verfahren zur Herstellung von Öl-modifizierten PTFE-Festschmierstoffen werden modifiziertes PTFE-Mikropulver mit mindestens Perfluoralkyl-(peroxy-)Radikalen und ein Öl oder ein Ölgemisch, welches olefinisch ungesättigte Doppelbindungen aufweist, in einem Masseverhältnis von modifiziertem PTFE-Mikropulver zu Öl oder Ölgemisch von 100 zu maximal 10 gemischt und unter mechanischer Beanspruchung bei Verweilzeiten von < 10 Minuten reaktiv umgesetzt. Vorteilhafterweise wird als modifiziertes PTFE-Mikropulver ein aus dem Polymerisationsverfahren vorliegendes PTFE-Mikropulver und/oder ein mittels hochenergetischer elektromagnetischer Strahlung und/oder Teilchenstrahlung und/oder plasmachemisch modifiziertes PTFE-Mikropulver mit Perfluoralkyl-(peroxy-)radikalen und/oder ein nach dem Polymerisationsverfahren vorliegendes PTFE-Mikropulver mit Gruppen, die während der reaktiven Umsetzung Perfluoralkyl-(oxy-)radikale bilden, eingesetzt.

Ebenfalls vorteilhafterweise wird als modifiziertes PTFE-Mikropulver ein mit Elektronen- und/oder Gamma- und/oder Röntgenstrahlung modifiziertes PTFE-Emulsionspolymer und/oder PTFE-Suspensionspolymer und/oder PTFE-Regenerat/Recyclat/Abfall ohne partikuläre und/oder faserförmige Inhaltsstoffe (Füll- und/oder Verstärkungsstoffe) eingesetzt.

Weiterhin vorteilhafterweise wird als modifiziertes PTFE-Mikropulver ein mit einer Strahlendosis von > 100 kGy, vorteilhafterweise von 250 bis 10.000 kGy, und besonders vorteilhaft von 500 bis 2.000 kGy, modifiziertes PTFE-Mikropulver eingesetzt.

Und auch vorteilhafterweise wird ein modifiziertes PTFE-Mikropulver mit einer Radikalkonzentration an Perfluoralkyl-(peroxy-)Radikalen von > 10¹⁶ Spin/g, vorteilhafterweise mit > 10¹⁷ Spin/g eingesetzt.

Vorteilhaft ist es auch, wenn als Öl oder Ölgemisch Öle oder Ölgemische teilweise mit mindestens einer oder mehreren Doppelbindungen im (Öl-)Molekül, vorteilhafterweise alle Öle oder Ölgemische mit mindestens einer Doppelbindung im (Öl)Molekül, eingesetzt werden.

Ebenfalls vorteilhaft ist es, wenn als Öl oder Ölgemisch Mineralöle und/oder Polyalphaolefine (POA) und/oder Esteröl(e) und/oder Polyalkylenglycolöl(e) (PAG) und/oder Silikonöl(e) und/oder ölartige EP(extrem pressure)-Verbindungen und/oder ölartige AW(antiwear)-Verbindungen eingesetzt werden.

Weiterhin vorteilhaft ist es, wenn als EP(extrem pressure)-Verbindungen und/oder AW(antiwear)-Verbindungen Dioleylhydrogenphosphit und/oder Oleyldihydrogenphosphat und/oder Dioleylhydrogenphosphat oder Gemische eingesetzt werden, die nach der reaktiven Umsetzung mindestens teilweise an das PTFE gekoppelt vorliegen und im Öl-modifizierten PTFE-Festschmierstoff EP- und AW-Eigenschaften aufweisen.

Und auch vorteilhaft ist es, wenn modifiziertes PTFE-Mikropulver und Öl oder Ölgemische in einem Masseverhältnis von modifiziertem PTFE-Mikropulver zu Öl oder Ölgemisch von 100 zu ≤ 5, eingesetzt werden.

Von Vorteil ist es auch, wenn das Mischen des modifizierten PTFE-Mikropulvers mit dem Öl oder Ölgemisch und/oder die reaktive Umsetzung mittels mechanischer Beanspruchung unter Inertgasatmosphäre, vorteilhafterweise unter Argon- oder Stickstoffatmosphäre, durchgeführt wird.

Und auch von Vorteil ist es, wenn das Mischen des modifizierten PTFE-Mikropulvers mit dem Öl oder Ölgemisch und/oder die reaktive Umsetzung mittels mechanischer Beanspruchung bei erhöhten Temperaturen von < 250 °C, vorteilhafterweise bei < 200 °C, noch vorteilhafterweise im Bereich bis 150 °C, durchgeführt wird.

Ebenfalls von Vorteil ist es, wenn die mechanische Beanspruchung mittels Scherbeanspruchung, vorteilhafterweise durch einen Kneter oder Extruder, durchgeführt wird.

Weiterhin von Vorteil ist es, wenn die reaktive Umsetzung mit einer Temperung der Reaktionsmischung vorzugsweise von 1 bis 8 Stunden bei 130 bis 170 °C, vorteilhafterweise unter Inertgasatmosphäre, abgeschlossen wird.

Die Öl-modifizierten PTFE-Festschmierstoffe sind nach dem erfindungsgemäßen Verfahren hergestellt.

Die Öl-modifizierten PTFE-Festschmierstoffe, die nach dem erfindungsgemäßen Verfahren hergestellt worden sind, werden verwendet zur direkten Schmierung von tribologischen Gleitpaarungen/Systemen oder als Additiv und/oder als Basismaterial für Öl-PTFE-Dispersionen oder ÖI-PTFE-Schmierstoffe in Form von Fetten oder Pasten.

Vorteilhafterweise werden die Öl-modifizierten PTFE-Festschmierstoffe, die nach dem erfindungsgemäßen Verfahren hergestellt worden sind, als Öl-freier PTFE-Festschmierstoff zur direkten Schmierung von bewegten Teilen wie in Getrieben und/oder in Lagern oder als Additiv zur Verbesserung der AW- und/oder EP-Eigenschaften von Fetten und Pasten verwendet.

Mit der Lösung wird es erstmals möglich, Öl-modifizierte PTFE-Festschmierstoffe anzugeben, die sich leichter handhaben und dosieren lassen und gut weiterverarbeitbar sind, und durch ein einfaches und kostengünstiges Verfahren herstellbar sind.

Insbesondere werden erfindungsgemäß schonend in kurzen Zeiten in einem Direktverfahren Öl(e) mit olefinisch ungesättigten Doppelbindungen, die im Unterschuss zu den PTFE-Mikropulvern gegeben werden, mit PTFE reaktiv umgesetzt, nahezu ohne oder ohne eine elektrostatische Aufladung der PTFE-Partikel. Dadurch treten die Probleme nach dem Stand der Technik, die durch elektrostatische Aufladung der PTFE-Partikel in der ÖI-PTFE-Dispersion nach dem Separieren des modifizierten PTFE aus der Dispersion, wie Agglomeratbildung und Kompaktierung, erst gar nicht auf, so dass die Öl-modifizierten PTFE-Festschmierstoffe bessere Eigenschaften für die Handhabung, Dosierung und (Weiter-)Verarbeitung aufweisen. Erreicht wird dies durch ein Verfahren zur Herstellung von Öl-modifizierten PTFE-Festschmierstoffen, bei dem modifiziertes PTFE-Mikropulver mit mindestens Perfluoralkyl-(peroxy-)Radikalen und ein Öl oder ein Ölgemisch, welches olefinisch ungesättigte Doppelbindungen aufweist, in einem Masseverhältnis von modifiziertem PTFE-Mikropulver zu Öl oder Ölgemisch von 100 : 10 gemischt und unter mechanischer Beanspruchung bei Verweilzeiten von < 10 Minuten reaktiv umgesetzt werden.

Mit dem erfindungsgemäßen Verfahren werden Öl-modifizierte PTFE-Festschmierstoffe hergestellt, die in Form von mit Ölmolekülen chemisch gekoppeltem und so modifiziertem PTFE-Mikropulver vorliegen und in einem Direktmodifizierungsverfahren aus modifiziertem PTFE-Mikropulver und einem Öl oder Ölgemisch hergestellt worden sind. Dies ist nach dem Stand der Technik nicht bekannt, da dort nur Öl-PTFE-Dispersionen hergestellt und modifiziert worden sind und nicht ein Feststoff aus Öl-modifiziertem PTFE-Festschmierstoff in einem Direktverfahren.

Speziell mit Öl modifizierte PTFE-Festschmierstoffe als Additive besitzen Interesse als Ausgangsstoff für eine Reihe von Schmierstoffen, wie Öl-PTFE-Dispersionen, Fetten, Pasten und auch als Pulver-Festschmierstoff. Im Gegensatz zur bekannten Herstellung von Öl-modifizierten PTFE-Festschmierstoffen über die Herstellung von Öl-PTFE-Dispersionen mit chemisch gekoppelten Ölmolekülen werden erfindungsgemäß die Öl-modifizierten PTFE-Festschmierstoffe in einem Direktmodifizierungsverfahren durch eine reaktive Umsetzung unter mechanischer Beanspruchung, vorteilhafterweise unter moderaten Bedingungen, indem das PTFE-Mikropulver mit dem Öl oder Ölgemisch unter guter Mischwirkung bei mittlerer bis niedriger Scherung in einem teilgefüllten Kneter oder Extruder bei Temperaturen vorzugsweise < 200 °C verarbeitet wird, um ein Verbacken/Kompaktieren oder Verfestigen der PTFE-Mikropulver-Partikel zu größeren Partikeln oder Klumpen zu vermeiden, vorzugsweise einer Scherbeanspruchung, wie in Knetern und/oder Extrudern, vorzugsweise in einem Doppelschneckenextruder oder Planetenwalzen-Extruder, hergestellt. In diesem Direktmodifizierungsverfahren werden die erfindungsgemäßen Öl-modifizierten PTFE-Festschmierstoffe durch Feststoff- oder Pastenverarbeitung und vorzugsweise in einer Feststoffextrusion als Feststoffpulver durch reaktive Umsetzung von modifiziertem PTFE-Mikropulver mit einem Öl oder Öl-Gemisch im Unterschuss, d.h. im Masseverhältnis modifiziertes PTFE zu Öl oder Ölgemisch von 100 : 10, vorteilhafterweise von 100 : ≤ 5 gemischt und reaktiv umgesetzt. Die reaktive Umsetzung kann vorteilhafterweise gleichzeitig während des Mischens der Ausgangsstoffe realisiert werden, oder auch danach.
Das Öl oder Öl-Gemisch enthält mindestens teilweise oder auch vollständig Ölmoleküle mit olefinisch ungesättigten Doppelbindungen, wobei in den Ölmolekülen, die olefinisch ungesättigt sind, eine oder mehrere olefinisch ungesättigte Doppelbindungen vorhanden sind.

Die reaktive Umsetzung wird bevorzugt unter einer Inertgasatmosphäre, wie Stickstoff oder Argon, durchgeführt. Als PTFE-Mikropulver werden PTFE-Mikropulver aus PTFE-Primärware (PTFE-Emulsionspolymer und/oder PTFE-Suspensionspolymer) und/oder PTFE-Sekundärmaterial (PTFE-Regenerat ohne oder ohne partikuläre Inhaltsstoffe/Füllstoffe größer 1 Mikrometer und/oder ohne faserförmige Inhaltsstoffe/Verstärkungsstoffe > (größer) 1 Mikrometer, wobei aber MoS₂/Molybdändisulfid, Ruß, Grafit und/oder Nanostoffe/Nanomaterialien wie beispielsweise Bornitrid, Siliziumcarbid, Diamantstaub, CNT (carbon nanotubes) und Graphen vorhanden sein können) mit Perfluoralkyl-(peroxy-)Radikalen und vorzugsweise PTFE-Emulsionspolymere mit Perfluoralkyl-(peroxy-)Radikalen zur chemischen Kopplung der Öl-Moleküle eingesetzt. Bevorzugt eingesetzt werden PTFE-Mikropulver, die strahlenchemisch und/oder plasmachemisch modifiziert sind und eine Radikalkonzentration an Perfluoralkyl-(peroxy-)radikalen von > 10¹⁶ Spin/g und vorzugsweise > 10¹⁷ Spin/g aufweisen. Es können aber auch PTFE-Mikropulver aus einer Direktpolymerisation eingesetzt werden, die nicht oder nachträglich noch strahlenchemisch und/oder plasmachemisch modifiziert sind, aber nach dem Polymerisationsverfahren Perfluoralkyl-(peroxy-)radikale besitzen und/oder aus dem Herstellungsprozess/Syntheseverfahren Gruppen zur Bildung von Perfluoralkyl-(peroxy-)radikalen besitzen und vor und/oder während der reaktiven Umsetzung eine Radikalkonzentration von > 10¹⁶ Spin/g und vorzugsweise > 10¹⁷ Spin/g aufweisen.

Die strahlenchemische Modifizierung kann durch hochenergetische elektromagnetische und/oder Teilchen-Strahlung, wie Gamma- und/oder Röntgenstrahlung und/oder Elektronen-Strahlung, erfolgen. Bevorzugt werden strahlenchemisch modifizierte PTFE-Mikropulver mit Bestrahlungsdosen > 100 kGy und vorzugsweise im Bereich 250 bis 10.000 kGy und besonders bevorzugt von 500 bis 2.000 kGy und/oder plasmachemisch modifizierte PTFE-Mikropulver eingesetzt.

Es konnte chemisch-analytisch über IR-Spektroskopie nachgewiesen werden, dass überraschenderweise nach der mechanischen Beanspruchung der modifizierten PTFE-Mikropulver mit mindestens Perfluoralkyl-(peroxy-)Radikalen und dem Öl oder Ölgemisch, welches olefinisch ungesättigte Doppelbindungen aufweist, die in einem Masseverhältnis von modifiziertem PTFE-Mikropulver zu Öl oder Ölgemisch von 100 zu maximal 10 gemischt worden sind, eine reaktive Kopplung der Ölmoleküle mit dem PTFE stattgefunden hat. Diese Kopplung hat stattgefunden, wenn Verweilzeiten von < 10 Minuten und vorzugsweise auch < 3 Minuten bei der Feststoffumsetzung unter mechanischer Beanspruchung unter guter Mischwirkung bei mittlerer bis niedriger Scherung in einem teilgefüllten Kneter oder Extruder bei Temperaturen < 250 °C und vorzugsweise < 200 °C und ganz bevorzugt im Temperaturbereich bis 150 °C realisiert worden sind.

Es hat sich als vorteilhaft erwiesen, dass als Abschluss der reaktiven Umsetzung eine Temperung der PTFE-Mikropulver zur Nachreaktion im Temperaturbereich von 100 bis < 250 °C und vorzugsweise 130 bis 170 °C durchgeführt wird. Vorteilhaft wird die reaktive Umsetzung einschließlich der Temperung unter einer Inertgasatmosphäre, wie Argon oder Stickstoff, durchgeführt. Vor allem bei kürzeren Verweilzeiten und/oder bei niedrigeren Temperaturen für die reaktive Umsetzung hat es sich als vorteilhaft erwiesen, wenn eine thermische Nachbehandlung angeschlossen wird, um den Kopplungsgrad am PTFE zu erhöhen.
Als vorteilhaft hat sich erwiesen, wenn die Öl-modifizierten PTFE-Festschmierstoffe bei Temperaturen im Bereich von 130 bis 150 °C und vorteilhafterweise unter einer Inertgasatmosphäre zwischen 1 h und 8 h getempert, d.h. in Wärme nachbehandelt werden. Die Temperung kann in Temperaturstufen erfolgen und kann auch länger als 8 Stunden durchgeführt werden. Die Temperung kann stationär ohne Bewegung der Öl-modifizierten PTFE-Festschmierstoffe oder vorzugsweise unter Mischen beispielsweise in einem beheizten (Taumel-)Mischer erfolgen. Die optimalen Temperbedingungen lassen sich leicht in wenigen Versuchen eingrenzen.
Auch vorteilhaft hat sich erwiesen, wenn die Öl-modifizierten PTFE-Festschmierstoffe unter einer Inertgasatmosphäre gelagert werden.
Mit den Öl-modifizierten PTFE-Festschmierstoffen als Additiv in Festsubstanz stehen Konzentrate für vielfältige Anwendungen im Schmierstoffbereich bis hin als Festschmierstoffkomponente in Öl-freien Getrieben zur Verfügung. Ferner besitzen diese Öl-modifizierten PTFE-Festschmierstoffe ein besonderes Potenzial für die Realisierung von Einlauf- und Notlaufeigenschaften.

Zur Verarbeitung der Öl-modifizierten PTFE-Festschmierstoffe zu Dispersionen, Fetten und Pasten werden bekannte Verfahren angewandt. So können stabile Öl-PTFE-Dispersionen aus den erfindungsgemäßen Öl-modifizierten PTFE-Festschmierstoffen verfahrenstechnisch nach DE 10 2007 055 927 A1 und DE 10 2011 083 076 A1 hergestellt werden. Fette und Pasten werden nach bekannten Verfahren der Fett- und Pastenherstellung realisiert. Vorteilhaft ist, dass speziell modifizierte PTFE-Festschmierstoffe in die Herstellung der Dispersionen, Fette und Pasten eingesetzt werden. Die Öl-modifizierten PTFE-Festschmierstoffe üben in Fetten und Pasten gleichzeitig die Funktion eines Verdickers aus und gewährleisten die Minimierung von Energieverlusten durch Reibung und Verschleiß.

Als Öl- oder Öl-Gemisch werden olefinisch ungesättigte Öle oder Öl-Gemische mit olefinisch ungesättigten Ölanteil(en), die eine und/oder mehrere Doppelbindungen im Ölmolekül besitzen, eingesetzt.
Als Öl- oder Öl-Gemisch werden olefinisch ungesättigte Öle oder Öl-Gemische, wie Mineralöl(e) und/oder Polyalphaolefin(e) (PAO) und/oder Esteröl(e) und/oder Polyalkylenglykol(e) (PAG) und/oder Silikonöl(e) oder EP(extreme pressure)- und/oder AW(antiwear)-Verbindungen in Reinsubstanz oder im Gemisch mit Mineralöl(en) und/oder Polyalphaolefin(en) (PAO) und/oder Esteröl(en) und/oder Polyalkylenglykol(en) (PAG) und/oder Silikonöl(en), die auch Anteile an olefinisch ungesättigten Doppelbindungen im Öl aufweisen können, eingesetzt.

Unter Öl oder Ölgemischen in den erfindungsgemäßen Öl-modifizierten PTFE-Festschmierstoffen werden im Rahmen dieser Erfindung neben den oben genannten Ölen auch ölartige EP(extreme pressure)- und/oder AW(antiwear)-Verbindungen mit mindestens einer olefinisch ungesättigten Doppelbindung im Molekül als Reinsubstanz oder im Gemisch mit Mineralöl(en) und/oder Polyalphaolefin(en) (PAO) und/oder Esteröl(en) und/oder Polyalkylenglykol(en) (PAG) und/oder Silikonöl(en), die auch Anteile an olefinisch ungesättigten Doppelbindungen im Öl aufweisen können, verstanden.

Die Öle oder Öl-Gemische, die erfindungsgemäß eingesetzt werden, sind olefinisch ungesättigte Öle oder Öl-Gemische mit olefinisch ungesättigtem Ölanteil(en), die mindestens eine, aber auch mehrere Doppelbindungen im Ölmolekül besitzen.
Als EP/AW-Verbindungen werden beispielsweise Dioleylhydrogenphosphit und/oder Oleyldihydrogenphosphat und/oder Dioleylhydrogenphosphat oder Gemische eingesetzt, die mindestens teilweise an das PTFE gekoppelt vorliegen und im Öl-modifizierten PTFE-Festschmierstoff EP- und AW-Eigenschaften aufweisen.
Die beispielsweise mit EP- und/oder AW-Öl-modifizierten PTFE-Partikel in Fetten und Pasten lagern sich bevorzugt auf einer Metall-(oxid-)Oberfläche an und reagieren unter Kopplung mit der Oberfläche, was durch Brugger- und die VKA-Untersuchungen nachweisbar ist. Unter den Bedingungen der Festkörperreibung wird zwar das Öl im Fett oder der Paste aus dem Spalt verdrängt, jedoch wirken die fixierten PTFE-Partikel mit den antiadhäsiven Eigenschaften als Festschmierstoffkomponente im Reibspalt zur Senkung von Reibung und Verschleiß. Zusätzlich wirken die im PTFE durch Modifizierung in Gegenwart von Sauerstoff generierten (Carbonylfluorid- und/oder Carbonsäure-)Gruppen unter Druck zwischen den Komponentenoberflächen, so dass sich vorteilhaft in der Reibfläche ein chemisch gekoppelter, gleitreibungsvermittelnder PTFE-Film ausbildet.

Der Vorteil der erfindungsgemäßen Lösung besteht in der Herstellung Öl-modifizierter PTFE-Festschmierstoff-Additive als Mikropulverfestprodukt oder als Paste in einem Direktverfahren mit kommerzieller Technik. Die Herstellung solcher Öl-modifizierten PTFE-Festschmierstoffe muss nicht, wie in DE 10 2007 055 927 A1 und DE 10 2011 083 076 A1 angegeben, erst über die Herstellung einer Öl-PTFE-Dispersion in einem Öl-Überschuss erfolgen, der anschließend aufwändig abgetrennt werden muss. Weiterhin sind Öl-modifizierte PTFE-Festschmierstoffe auch nicht aus den Lösungen von DE 103 51 812 A1, DE 103 51 813 A1 oder DE 10 2004 016 876 A1 bekannt, da olefinisch ungesättigte Öle bekanntermaßen nicht zu den polymerisierbaren Monomeren, Oligomeren oder Polymeren gehören.

Nachfolgend wird die Erfindung an mehreren Ausführungsbeispielen näher erläutert.

### Beispiel 1:

In einen Haake-Laborkneter werden bei 80 °C mit 100 U/min 50 g PTFE-Mikropulver Zonyl® MP1100 (DuPont, strahlenchemisch modifiziert durch Elektronenbestrahlung mit ca. 500 kGy, Radikalkonzentration von 1,5 10¹⁸ Spin/g PTFE) und anschließend 10 g Esteröl Synative ES TMP 05/68 gegeben und gemischt. Nach ca. 1 min werden noch 45 g PTFE-Mikropulver zugegeben. Nachdem die Knetertemperatur auf 150 °C erhöht wurde, wird die Mischung 5 min mit 100 U/min gemischt. Der Feststoff wird entnommen, abgefüllt und die Gefäßatmosphäre für die Lagerung gegen Reinststickstoff ausgetauscht.

2 g des Feststoffes werden 1 Stunde in 20 ml Benzin bei 50 °C gerührt und abfiltriert. Mit diesem Feststoff wird diese Extraktion weitere 4 Mal durchgeführt. Anschließend wird der Filterrückstand getrocknet und mittels IR-Spektroskopie charakterisiert. Die IR-Absorptionen des extrahierten Feststoffes werden nach der Basislinienkorrektur mittels der CF₂-Absorption bei 2365 cm⁻¹ zum PTFE-Ausgangsprodukt auf 1,0 normiert. Nach der Extraktion wurde im IR-Spektrum neben den CH₂-Absorptionsbanden eine starke Ester-Carbonyl-Absorptionsbande des Esteröls am PTFE bei 1745 cm⁻¹ mit 0,75 detektiert, was auf die reaktive Kopplung in dieser Feststoff-Umsetzung hinweist.

Weitere 10 g dieses Feststoffes aus dem Kneterversuch werden in einem Rundkolben evakuiert und mit Reinststickstoff gespült. Diese Prozedur wird 3 x wiederholt. Der unter Reinststickstoff gelagerte Feststoff wird nun 6 Stunden bei 150 °C getempert. 2 g dieses getemperten Feststoffes werden wie oben beschrieben in Benzin gereinigt, getrocknet und mittels IR-Spektroskopie charakterisiert. Nach der Extraktion wurde im IR-Spektrum neben den CH₂-Absorptionsbanden eine stärkere Ester-Carbonyl-Absorptionsbande des Esteröls am PTFE bei 1747 cm⁻¹ mit 1,15 detektiert, was auf die zusätzliche reaktive Kopplung durch diese Temperung hinweist.

### Beispiel 2:

In einen Haake-Laborkneter werden bei 80 °C mit 100 U/min 50 g PTFE-Mikropulver Zonyl® MP1100 (DuPont, strahlenchemisch modifiziert durch Elektronenbestrahlung mit ca. 500 kGy, Radikalkonzentration von 1,5 10¹⁸ Spin/g PTFE) und anschließend 10 g Esteröl Synative ES TMP 05/68 gegeben und gemischt. Nach ca. 1 min werden noch 45 g PTFE-Mikropulver zugegeben. Nachdem die Knetertemperatur auf 200 °C erhöht wurde, wird die Mischung 3 min mit 100 U/min gemischt. Der Feststoff wird entnommen, abgefüllt und die Gefäßatmosphäre für die Lagerung gegen Reinststickstoff ausgetauscht.

2 g des Feststoffes werden wie in Beispiel 1 gereinigt und getrocknet und mittels IR-Spektroskopie charakterisiert. Nach der Extraktion wurde im IR-Spektrum neben den CH₂-Absorptionsbanden eine starke Ester-Carbonyl-Absorptionsbande des Esteröls am PTFE bei 1747 cm⁻¹ mit 0,4 detektiert, was auf die reaktive Kopplung in dieser Feststoff-Umsetzung hinweist, was aber auch belegt, dass die Temperatur von 200 °C zu hoch ist und schon verstärkt Radikaldeaktivierungen am PTFE z.B. durch Radikalrekombination ablaufen
Das anschließende Tempern der MP1100-TMP-Pulvermasse brachte im IR-Spektrum nach der Reinigung keine wesentliche Erhöhung der Ester-Carbonyl-Absorptionsbande.

### Beispiel 3:

In einen Haake-Laborkneter werden bei 80 °C mit 100 U/min 50 g PTFE-Mikropulver Zonyl® MP1200 ((DuPont, strahlenchemisch modifiziert durch Elektronenbestrahlung mit ca. 500 kGy, Radikalkonzentration von 7,8 10¹⁷ Spin/g PTFE) und anschließend 10 g Esteröl Synative ES TMP 05/68 gegeben und gemischt. Nach ca. 1 min werden noch 45 g PTFE-Mikropulver zugegeben. Nachdem die Knetertemperatur auf 150 °C erhöht wurde, wird die Mischung 2 min mit 100 U/min gemischt. Der Feststoff wird entnommen, abgefüllt und die Gefäßatmosphäre für die Lagerung gegen Reinststickstoff ausgetauscht. 2 g des Feststoffes werden wie in Beispiel 1 gereinigt und mittels IR- Spektroskopie charakterisiert. Nach der Extraktion wurde im IR-Spektrum neben den CH₂-Absorptionsbanden eine Ester-Carbonyl-Absorptionsbande des Esteröls am PTFE bei 1746 cm⁻¹ mit 0,55 detektiert, was auf die reaktive Kopplung in dieser Feststoff-Umsetzung hinweist.

### Beispiel 4:

In einen Haake-Laborkneter werden bei 80 °C mit 100 U/min 50 g PTFE-Mikropulver Zonyl® MP1100 (DuPont, strahlenchemisch modifiziert durch Elektronenbestrahlung mit ca. 500 kGy, Radikalkonzentration von 1,5 · 10¹⁸ Spin/g PTFE) und anschließend 10 g Polyalphaolefin PAO-8 gegeben und gemischt. Nach ca. 1 min werden noch 45 g PTFE-Mikropulver zugegeben. Nachdem die Knetertemperatur auf 150 °C erhöht wurde, wird die Mischung 5 min mit 100 U/min gemischt. Der Feststoff wird entnommen, abgefüllt und die Gefäßatmosphäre für die Lagerung gegen Reinststickstoff ausgetauscht. 2 g des Feststoffes werden wie in Beispiel 1 gereinigt und mittels IR- Spektroskopie charakterisiert. Nach der Extraktion wurden im IR-Spektrum die CH₂-Absorptionsbanden des Polyalphaolefins am PTFE bei 2932 cm⁻¹ mit 0,15 und bei 2860 cm⁻¹ mit 0,10 detektiert, was auf die reaktive Kopplung in dieser Feststoff-Umsetzung hinweist.

### Beispiel 5:

In einen Haake-Laborkneter werden bei 80 °C mit 100 U/min 50 g PTFE-Mikropulver Zonyl® MP1100 (DuPont, strahlenchemisch modifiziert durch Elektronenbestrahlung mit ca. 500 kGy, Radikalkonzentration von 1,5 · 10¹⁸ Spin/g PTFE) und anschließend 10 g Duraphos® AP-240L [Dioleylhydrogenphosphit] gegeben und gemischt. Nach ca. 1 min werden noch 45 g PTFE-Mikropulver zugegeben. Nachdem die Knetertemperatur auf 150 °C erhöht wurde, wird die Mischung 5 min mit 100 U/min gemischt. Der Feststoff wird entnommen, abgefüllt und die Gefäßatmosphäre für die Lagerung gegen Reinststickstoff ausgetauscht. 2 g des Feststoffes werden wie in Beispiel 1 gereinigt und mittels IR-Spektroskopie charakterisiert. Nach der Extraktion wurden im IR-Spektrum die charakteristischen Dioleylhydrogenphosphit-Absorptionsbanden am PTFE detektiert, was auf die reaktive Kopplung in dieser Feststoff-Umsetzung hinweist.

Zur Herstellung einer Fettmasse, in der dieser modifizierte Feststoff gleichzeitig als Festschmierstoff und Verdicker fungiert, werden 10 g des Feststoffes unter Reinststickstoffatmosphäre in einem Rundkolben in einem Ölbad bei 150 °C 4 Stunden getempert. Dieser getemperte Feststoff wird in einem Mörser mit 2 g Polyalphaolefin PAO-8 verrieben, bis eine viskose Paste entsteht. Die abschließende Homogenisierung dieser Fettmasse wird auf einem kommerziellen Walzenstuhl durchgeführt. Die cremeartige Fettmasse ist visuell ein homogenes Fettprodukt mit einer guten Streichfähigkeit.

### Beispiel 6:

In einen Haake-16mm-Doppelschnecken-Laborextruder werden bei 100 U/min und dem Temperaturprofil: Einzug 80 °C - 150 °C - 150 °C - Düse 120 °C das PTFE-Mikropulver Zonyl® MP1100 (DuPont, strahlenchemisch modifiziert durch Elektronenbestrahlung mit ca. 500 kGy, Radikalkonzentration von 1,5 · 10¹⁸ Spin/g PTFE) mit 1,0 kg/h dosiert. Im ersten Block werden 100 g/h Esteröl Synative ES TMP 05/68 mittels Flüssigdosierung dosiert. Der erhaltene Feststoff wird nach Austritt aus der Düse in einem Gefäß mit flüssigem Stickstoff aufgefangen. Nach Abdampfen/Verflüchtigen des Stickstoffs wird der Feststoff abgefüllt und die Gefäßatmosphäre für die Lagerung gegen Reinststickstoff ausgetauscht.
2 g des Feststoffes werden wie in Beispiel 1 gereinigt und mittels IR- Spektroskopie charakterisiert. Nach der Extraktion wurde im IR-Spektrum neben den CH₂-Absorptionsbanden eine starke Ester-Carbonyl-Absorptionsbande des Esteröls am PTFE bei 1745 cm⁻¹ mit 0,65 detektiert, was auf die reaktive Kopplung in dieser Feststoff-Umsetzung hinweist.

### Beispiel 7:

In einen Haake-16mm-Doppelschnecken-Laborextruder werden bei 100 U/min und dem Temperaturprofil: Einzug 80 °C - 150 °C - 150 °C - Düse 120 °C das PTFE-Mikropulver TF 2025 (3M/Dyneon, strahlenchemisch nachträglich mit 700 kGy Gamma-Strahlung modifiziert) mit 1,0 kg/h dosiert. Im ersten Block werden 90 g/h Polyalphaolefin PAO-8 mittels Flüssigdosierung dosiert. Der erhaltene Feststoff wird nach Austritt aus der Düse in einem Gefäß mit flüssigem Stickstoff aufgefangen. Nach Abdampfen/Verflüchtigen des Stickstoffs, wird der Feststoff abgefüllt und die Gefäßatmosphäre für die Lagerung gegen Reinststickstoff ausgetauscht. 2 g des Feststoffes werden wie in Beispiel 1 gereinigt und mittels IR-Spektroskopie charakterisiert. Nach der Extraktion wurden im IR-Spektrum die CH₂-Absorptionsbanden des Polyalphaolefins am PTFE bei 2932 cm⁻¹ mit 0,12 und bei 2860 cm⁻¹ mit 0,8 detektiert, was auf die reaktive Kopplung in dieser Feststoff-Umsetzung hinweist.

Fettherstellung und Prüfung auf dem VKA-Teststand:
In ein Basismaterial aus Polyalphaolefin, PE-Wachs und einem Korrosionsschutzadditiv auf Ca-Sulfonatbasis werden 3 Ma.-% des Feststoffes mittels Zahnscheibenrührer/Disperser im Temperaturbereich von 130 bis 145 °C unter Reinststickstoff-/Schutzgasatmosphäre eingearbeitet. Als zusätzliches Dispergieraggregat wurde in der Schmelze bei 130 °C ein Ultra-Turrax mit Drehzahlen von 15.000 U/min zugeschaltet.
In VKA-Untersuchungen wurden von dem mit 3 Ma.-% Feststoff-modifizierten Basismaterial eine Verschweißkraft von 2600 N und ein Verschleiß von 0,98 mm im Vergleich zum reinen Basismaterial mit einer Verschweißkraft von 1400 N und einem Verschleiß von 1,43 mm ermittelt.

### Beispiel 8:

In einen Haake-16mm-Doppelschnecken-Laborextruder werden bei 100 U/min und dem Temperaturprofil: Einzug 80 °C - 150 °C - 150 °C - Düse 120 °C das PTFE-Mikropulver Zonyl® MP1100 (DuPont, strahlenchemisch modifiziert durch Elektronenbestrahlung mit ca. 500 kGy, Radikalkonzentration von 1,5 10¹⁸ Spin/g PTFE) mit 1,0 kg/h dosiert. Im ersten Block werden 100 g/h Duraphos® AP-240L [**Dioleylhydrogenphosphit**] mittels Flüssigdosierung dosiert. Der erhaltene Feststoff wird nach Austritt aus der Düse in einem Gefäß mit flüssigem Stickstoff aufgefangen. Nach Abdampfen/Verflüchtigen des Stickstoffs, wird der Feststoff abgefüllt und die Gefäßatmosphäre für die Lagerung gegen Reinststickstoff ausgetauscht. 2 g des Feststoffes werden wie in Beispiel 1 gereinigt und mittels IR-Spektroskopie charakterisiert. Nach der Extraktion wurden im IR-Spektrum die charakteristischen AP240L-Absorptionsbanden am PTFE analog zum Beispiel 5 detektiert, was auf die reaktive Kopplung in dieser Feststoff-Umsetzung hinweist.

Fettherstellung und Prüfung auf dem VKA-Teststand:
In ein Basismaterial aus Polyalphaolefin, PE-Wachs und einem Korrosionsschutzadditiv auf Ca- Sulfonatbasis werden 3 Ma.-% des Feststoffes mittels Zahnscheibenrührer/Disperser im Temperaturbereich von 130 bis 145 °C unter Reinststickstoff-/Schutzgasatmosphäre eingearbeitet. Als zusätzliches Dispergieraggregat wurde in der Schmelze bei 130 °C ein Ultra-Turrax mit Drehzahlen von 15.000 U/min zugeschaltet.
In VKA-Untersuchungen wurden von dem mit 3 Ma.-% Feststoff-modifizierten Basismaterial eine Verschweißkraft von 4400 N und ein Verschleiß von 0,48 mm Vergleich zum reinen Basismaterial mit einer Verschweißkraft von 1400 N und einem Verschleiß von 1.43 mm erreicht.

## Patentansprüche

1. Verfahren zur Herstellung von Öl-modifizierten PTFE-Festschmierstoffen, bei dem modifiziertes PTFE-Mikropulver mit mindestens Perfluoralkyl-(peroxy-)Radikalen und ein Öl oder ein Ölgemisch, welches olefinisch ungesättigte Doppelbindungen aufweist, in einem Masseverhältnis von modifiziertem PTFE-Mikropulver zu Öl oder Ölgemisch von 100 zu maximal 10 gemischt und unter mechanischer Beanspruchung bei Verweilzeiten von < 10 Minuten reaktiv umgesetzt werden.

2. Verfahren nach Anspruch 1, bei dem als modifiziertes PTFE-Mikropulver ein aus dem Polymerisationsverfahren vorliegendes PTFE-Mikropulver und/oder ein mittels hochenergetischer elektromagnetischer Strahlung und/oder Teilchenstrahlung und/oder plasmachemisch modifiziertes PTFE-Mikropulver mit Perfluoralkyl-(peroxy-)radikalen und/oder ein nach dem Polymerisationsverfahren vorliegendes PTFE-Mikropulver mit Gruppen, die während der reaktiven Umsetzung Perfluoralkyl-(oxy-)radikale bilden, eingesetzt wird.

3. Verfahren nach Anspruch 2, bei dem als modifiziertes PTFE-Mikropulver ein mit Elektronen- und/oder Gamma- und/oder Röntgenstrahlung modifiziertes PTFE-Emulsionspolymer und/oder PTFE-Suspensionspolymer und/oder PTFE-Regenerat/Recyclat/Abfall ohne partikuläre und/oder faserförmige Inhaltsstoffe (Füll- und/oder Verstärkungsstoffe) eingesetzt wird.

4. Verfahren nach Anspruch 2, bei dem als modifiziertes PTFE-Mikropulver ein mit einer Strahlendosis von > 100 kGy, vorteilhafterweise von 250 bis 10.000 kGy, und besonders vorteilhaft von 500 bis 2.000 kGy, modifiziertes PTFE-Mikropulver eingesetzt wird.

5. Verfahren nach Anspruch 1, bei dem ein modifiziertes PTFE-Mikropulver mit einer Radikalkonzentration an Perfluoralkyl-(peroxy-)Radikalen von > 10¹⁶ Spin/g, vorteilhafterweise mit > 10¹⁷ Spin/g eingesetzt wird.

6. Verfahren nach Anspruch 1, bei dem als Öl oder Ölgemisch Öle oder Ölgemische teilweise mit mindestens einer oder mehreren Doppelbindungen im (Öl-)Molekül, vorteilhafterweise alle Öle oder Ölgemische mit mindestens einer Doppelbindung im (Öl)Molekül, eingesetzt werden.

7. Verfahren nach Anspruch 6, bei dem als Öl oder Ölgemisch Mineralöle und/oder Polyalphaolefine (POA) und/oder Esteröl(e) und/oder Polyalkylenglycolöl(e) (PAG) und/oder Silikonöl(e) und/oder ölartige EP(extrem pressure)-Verbindungen und/oder ölartige AW(antiwear)-Verbindungen eingesetzt werden, wobei vorteilhafterweise als EP(extrem pressure)-Verbindungen und/oder AW(antiwear)-Verbindungen Dioleylhydrogenphosphit und/oder Oleyldihydrogenphosphat und/oder Dioleylhydrogenphosphat oder Gemische eingesetzt werden, die nach der reaktiven Umsetzung mindestens teilweise an das PTFE gekoppelt vorliegen und im Öl-modifizierten PTFE-Festschmierstoff EP- und AW-Eigenschaften aufweisen.

8. Verfahren nach Anspruch 1, bei dem modifiziertes PTFE-Mikropulver und Öl oder Ölgemische in einem Masseverhältnis von modifiziertem PTFE-Mikropulver zu Öl oder Ölgemisch von 100 zu ≤ 5, eingesetzt werden.

9. Verfahren nach Anspruch 1, bei dem das Mischen des modifizierten PTFE-Mikropulvers mit dem Öl oder Ölgemisch und/oder die reaktive Umsetzung mittels mechanischer Beanspruchung unter Inertgasatmosphäre, vorteilhafterweise unter Argon- oder Stickstoffatmosphäre, durchgeführt wird.

10. Verfahren nach Anspruch 1, bei dem das Mischen des modifizierten PTFE-Mikropulvers mit dem Öl oder Ölgemisch und/oder die reaktive Umsetzung mittels mechanischer Beanspruchung bei erhöhten Temperaturen von < 250 °C, vorteilhafterweise bei < 200 °C, noch vorteilhafterweise im Bereich bis 150 °C, durchgeführt wird.

11. Verfahren nach Anspruch 1, bei dem die mechanische Beanspruchung mittels Scherbeanspruchung, vorteilhafterweise durch einen Kneter oder Extruder, durchgeführt wird.

12. Verfahren nach Anspruch 1, bei dem die reaktive Umsetzung mit einer Temperung der Reaktionsmischung vorzugsweise von 1 bis 8 Stunden bei 130 bis 170 °C, vorteilhafterweise unter Inertgasatmosphäre, abgeschlossen wird.

## Claims

1. Process for producing oil-modified solid PTFE lubricants, in which modified PTFE micropowder having at least perfluoroalkyl(peroxy) radicals and an oil or oil mixture having olefinically unsaturated double bonds are mixed in a mass ratio of modified PTFE micropowder to oil or oil mixture of 100 to not more than 10, and are reacted under mechanical stress with dwell times of < 10 minutes.

2. Process according to Claim 1, in which the modified PTFE micropowder used is a PTFE micropowder present from the polymerization process and/or a PTFE micropowder having perfluoroalkyl(peroxy) radicals that has been modified by means of high-energy electromagnetic radiation and/or particle radiation and/or by plasma-chemical means and/or a PTFE micropowder having groups that form perfluoroalkyl-(oxy) radicals during the reaction which is present after the polymerization process is used.

3. Process according to Claim 2, in which the modified PTFE micropowder used is a PTFE emulsion polymer and/or PTFE suspension polymer and/or PTFE regenerate/recyclate/waste (excluding particulate and/or fibrous ingredients (fillers and/or reinforcers)) that has been modified with electron beams and/or gamma radiation and/or x-radiation.

4. Process according to Claim 2, in which the modified PTFE micropowder used is a PTFE micropowder modified with a radiation dose of > 100 kGy, advantageously of 250 to 10 000 kGy and particularly advantageously of 500 to 2000 kGy.

5. Process according to Claim 1, in which a modified PTFE micropowder having a radical concentration of perfluoroalkyl(peroxy) radicals of > 10¹⁶ spins/g, advantageously with > 10¹⁷ spins/g, is used.

6. Process according to Claim 1, in which the oil or oil mixture used comprises partly oils or oil mixtures having at least one or more double bonds in the (oil) molecule, advantageously entirely oils or oil mixtures having at least one double bond in the (oil) molecule.

7. Process according to Claim 6, in which the oil or oil mixture used comprises mineral oils and/or polyalphaolefins (POAs) and/or ester oil (s) and/or polyalkylene glycol oil (s) (PAGs) and/or silicone oil(s) and/or oil-like EP (extreme-pressure) compounds and/or oil-like AW (antiwear) compounds, where the EP (extreme pressure) and/or AW (antiwear) compounds used are advantageously dioleylhydrogenphosphite and/or oleyldihydrogenphosphate and/or dioleylhydrogenphosphate or mixtures which, after the reaction, are at least partly coupled to the PTFE and have EP and AW properties in the oil-modified solid PTFE lubricant.

8. Process according to Claim 1, in which modified PTFE micropowder and oil or oil mixtures are used in a mass ratio of modified PTFE micropowder to oil or oil mixture of 100 to ≤ 5.

9. Process according to Claim 1, in which the mixing of the modified PTFE micropowder with the oil or oil mixture and/or the reaction by means of mechanical stress is conducted under inert gas atmosphere, advantageously under argon or nitrogen atmosphere.

10. Process according to Claim 1, in which the mixing of the modified PTFE micropowder with the oil or oil mixture and/or the reaction by means of mechanical stress is conducted at elevated temperatures of < 250°C, more advantageously at < 200°C, still more advantageously in the range up to 150°C.

11. Process according to Claim 1, in which the mechanical stress is conducted by means of shear stress, advantageously by an extruder or kneader.

12. Process according to Claim 1, in which the reaction is concluded with heating of the reaction mixture at 130 to 170°C, advantageously under inert gas atmosphere, preferably for 1 to 8 hours.

## Revendications

1. Procédé de fabrication de lubrifiants solides à base de PTFE modifiés par des huiles, selon lequel une micropoudre de PTFE modifiée comprenant au moins des radicaux perfluoroalkyl-(peroxy) et une huile ou un mélange d'huiles, qui comprend des doubles liaisons oléfiniquement insaturées, sont mélangés en un rapport en masse entre la micropoudre de PTFE modifiée et l'huile ou le mélange d'huiles de 100 sur au plus 10, et mis en réaction au moyen d'une sollicitation mécanique pendant des temps de séjour < 10 minutes.

2. Procédé selon la revendication 1, selon lequel une micropoudre de PTFE telle qu'issue du procédé de polymérisation et/ou une micropoudre de PTFE modifiée par un rayonnement électromagnétique de haute énergie et/ou un faisceau de particules et/ou chimiquement par plasma, comprenant des radicaux perfluoroalkyl-(peroxy) et/ou une micropoudre de PTFE telle qu'issue du procédé de polymérisation, comprenant des groupes qui forment des radicaux perfluoroalkyl-(oxy) pendant la mise en réaction sont utilisées en tant que micropoudre de PTFE modifiée.

3. Procédé selon la revendication 2, selon lequel un polymère en émulsion de PTFE modifié avec un faisceau d'électrons et/ou un rayonnement gamma et/ou un rayon X et/ou un polymère en suspension de PTFE et/ou un produit régénéré/recyclé/un déchet de PTFE sans contenu particulaire et/ou fibreux (charges et/ou matières de renforcement) sont utilisés en tant que micropoudre de PTFE modifiée.

4. Procédé selon la revendication 2, selon lequel une micropoudre de PTFE modifiée avec une dose de rayonnement > 100 kGy, de préférence de 250 à 10 000 kGy et de manière particulièrement préférée de 500 à 2 000 kGy est utilisée en tant que micropoudre de PTFE modifiée.

5. Procédé selon la revendication 1, selon lequel une micropoudre de PTFE modifiée ayant une concentration en radicaux de radicaux perfluoroalkyl-(peroxy) > 10¹⁶ spin/g, de préférence > 10¹⁷ spin/g est utilisée.

6. Procédé selon la revendication 1, selon lequel des huiles ou des mélanges d'huiles comprenant en partie au moins une ou plusieurs doubles liaisons dans la molécule (d'huile), avantageusement des huiles ou des mélanges d'huiles comprenant toutes au moins une double liaison dans la molécule (d'huile), sont utilisés en tant qu'huile ou mélange d'huiles.

7. Procédé selon la revendication 6, selon lequel des huiles minérales et/ou des polyalphaoléfines (POA) et/ou une ou plusieurs huiles d'ester et/ou une ou plusieurs huiles de polyalkylène glycol (PAG) et/ou une ou plusieurs huiles de silicone et/ou des composés huileux EP ("extrem pressure", pression extrême) et/ou des composés huileux AW ("antiwear", anti-usure) sont utilisés en tant qu'huile ou mélange d'huiles ; l'hydrogénophosphite de dioléyle et/ou le dihydrogénophosphate d'oléyle et/ou l'hydrogénophosphate de dioléyle ou des mélanges étant utilisés de préférence en tant que composés EP ("extrem pressure", pression extrême) et/ou composés AW ("antiwear", anti-usure), qui se présentent après la mise en réaction au moins en partie sous forme couplée au PTFE, et présentent des propriétés EP et AW dans le lubrifiant solide à base de PTFE modifié par des huiles.

8. Procédé selon la revendication 1, selon lequel la micropoudre de PTFE modifiée et l'huile ou les mélanges d'huiles sont utilisés en un rapport en masse entre la micropoudre de PTFE modifiée et l'huile ou le mélange d'huiles de 100 sur ≤ 5.

9. Procédé selon la revendication 1, selon lequel le mélange de la micropoudre de PTFE modifiée avec l'huile ou le mélange d'huiles et/ou la mise en réaction au moyen d'une sollicitation mécanique sont réalisés dans une atmosphère de gaz inerte, de préférence dans une atmosphère d'argon ou d'azote.

10. Procédé selon la revendication 1, selon lequel le mélange de la micropoudre de PTFE modifiée avec l'huile ou le mélange d'huiles et/ou la mise en réaction au moyen d'une sollicitation mécanique sont réalisés à des températures élevées < 250 °C, de préférence < 200 °C, de manière davantage préférée dans la plage allant jusqu'à 150 °C.

11. Procédé selon la revendication 1, selon lequel la sollicitation mécanique est réalisée au moyen d'une sollicitation de cisaillement, de préférence par un malaxeur ou une extrudeuse.

12. Procédé selon la revendication 1, selon lequel la mise en réaction est terminée par un recuit du mélange réactionnel, de préférence pendant 1 à 8 heures à une température de 130 à 170 °C, avantageusement dans une atmosphère de gaz inerte.
